# EUROPEAN PATENT SPECIFICATION

(11) **EP 2 775 268 B1**
(45) Date of publication and mention of the grant of the patent: **16.10.2019**
(21) Application number: 13005711.0
(22) Date of filing: 07.12.2013
(51) Int. Cl.: G01D 5/26, G01B 11/16

(54) **A method of a non-contact detection of a moving object absolute position by making use of speckle effect and device for implementation of this method**
Verfahren zur berührungslosen Erfassung der absoluten Position eines bewegten Objektes durch Verwendung des Speckleeffekts und Vorrichtung zur Durchführung dieses Verfahrens
Procédé de détection sans contact de la position absolue d'un objet mobile par l'utilisation d'un effet de taches et dispositif pour la mise en ouvre de ce procédé

(30) Priority: 05.03.2013 CZ 20130164
(43) Date of publication of application: 10.09.2014
(73) Proprietor: Univerzita Palackého, 771 47 Olomouc (CZ)
(72) Inventor: Horváth, Pavel, 779 00 Olomouc (CZ); Smíd, Petr, 779 00 Olomouc (CZ); Hrabovský, Miroslav, 779 00 Olomouc (CZ); Stanke, Ladislav, 736 01 Havírov - Podlesí (CZ)
(74) Representative: Soukup, Petr

(56) References cited:
- WO-A1-91/19169
- CZ-B6- 302 107
- JP-A- H05 215 532
- US-A1- 2006 229 744
- US-B1- 6 248 994

## Description

### Art Domain

The invention regards a system for non-contact detection of a moving object absolute position by making use of a speckle effect in optics, arising during reflection of a coherent or a quasi-coherent light from the surface of a tested object.

### Present Prior Art

The solution of problematic of non-contact detection of position of a moving object in optics has noted, during its development, two important stages. The first stage is connected with a method of a holographic interferometry and it reached its peak in the seventies of the 20^{th} century. It was namely work *"*On direct measurements of strain and rotation in holographic interferometry using the line of complete localization" (Dubas, M., Schumann, W. Opt. Acta, 22(10), 1975, p. 807) where was determined a deformation tensor on the surface of the object and thus also described its rotation components and translation components. A general method designed in this work however, except common procedures known from the holographic interferometry, required a very accurate localisation of interference fringes. The localisation accuracy was at the same time a key marker for an evaluation of rotation and translation of the surface of tested object.

The next stage is already linked with a speckle phenomenon, whose basic characteristic and possible application potential are well described in publications *"*Laser Speckle and Application in Optics" (Francon, M., Academic Press, New York, 1979) and *"*Laser speckle and related phenomena" (Ed. by Dainty, J.C., Springer-Verlag, Berlin, 1984). Methods based on this phenomenon noted a steep development in mid-seventies of the 20^{th} century. In literature we can find many methods how to measure a relative rotation or a relative translation of the object with use of a speckle effect. It is especially a photographic and correlation method.

In speckle photography as it is described in articles *"*Displacement Measurement from Double-exposure Laser Photograhps" (Archbold, E., Ennos, A.E. Opt. Acta 19, 1972, p. 253) and "A study of the use of laser speckle to measure small tilts of optically rough surfaces accurately" (Tiziani, H.J. Opt. Commun., 5, 1972, p. 271) there are at first two speckle patterns mutually shifted in an orthogonal direction to observation direction, influenced by a small rotation of the object around the axis in the plane of its surface or by a small translation of the object in the plane of its surface, recorded by a double-exposure into the layer of a light-sensitive material. After its development and an illumination the direction and the size of a relative rotation or a relative translation of tested object results from an analysis of a direction and a period of interference fringes in region of Fourier transform. An evaluation of rotation of the object is in this case analogical to detection of the slope of the surface of the object. An important role for determination of a resolving ability of the method plays also size of the speckles in the speckle pattern. A displacement of the speckle field which is corresponding with executed rotation or translation of the object has to be bigger than is the dimension of the speckles themselves. A development of modern optoelectronic components, especially of matrix sensors, then led, from mid nineties of the 20^{th} century, to a digital modification of above mentioned method, see for example the article *"*Some Recent Advances in Electronic Speckle Photography" (Sjödahl, M. Opt. Lasers Eng., 29(2-3), 1998, p. 125).

A correlation method does not involve a limiting condition concerning the size of speckles in the speckle pattern and at the same time does not work with interference fringes. It is based on a statistic approach as it is mentioned in the articles *"*Speckle displacement and decorrelation in the diffraction and image fields for small object deformation" (Yamaguchi, I. Opt. Acta, 28(10), 1981, p. 1359) and *"*Laser speckle rotary encoder" (Yamaguchi, I., Fujita, T. Appl. Opt., 28(20), 1989, p. 4401) or in a monograph *"*Koherenční zrnitost v optice/Speckle in Optics" (Hrabovský, M., Bača, Z., Horváth, P., Univerzita Palackého in Olomouc, Olomouc, 2001). A position of maximum of the function of cross-correlation of the speckle patterns recorded by a light-sensitive image sensor before and after rotation or translation of the object which generates speckle field provides information about size of relative displacement of this field. From the field displacement is consequently possible even to determine required information about a relative change of the state, for example about rotation or translation of the surface of tested object. This problems is generally known.

From the file CZ 295817 is likewise known the device for non-contact detection of the stability of the location of the object, which uses a converse effect of speckle phenomenon only for a registration of the change of object position, however without possibility of its quantitative, thus numeral, evaluation. Further is in the file CZ 302107 described a device for a quantitative evaluation of a human eye movement or movement of general physical objects, thus a dynamic behaviour of all the components of so called small deformation tensor of the elementary area of the tested object surface. In this device is during evaluation necessary to determine particular rotation or translation component of a small deformation tensor according to derived model of the measurement which is mentioned, for example, in publications *"*Theory of speckle displacement and decorrelation and its application in mechanics" (Hrabovský, M., Bača, Z., Horváth, P. Opt. Lasers Eng. 32(4), 2000, p. 395) and *"*Full theory of speckle displacement and decorrelation in the image field by wave and geometrical description and its application in mechanics" (Horváth, P., Hrabovský, M., Šmíd, P. J. Mod. Opt., 51(5), 2004, p. 725). However this device determines only relative values of particular rotation or translation component of the small deformation tensor.

Furthermore, devices for absolute or relative rotation position evaluation of rotary body using speckle effect are known from the files JP H05 215532 A and WO 91/19169 A1. In these devices speckle patterns generated by the object under test are compared to stored speckle patterns or a reference speckle pattern to determine angular position of the rotary object or its torque. These devices are used in evaluation of movement of only one rotation component of the object movement. Next, the devices does not comprise an illumination optical system which is adjustably fixed into a motor-driven translation system, which is placed between the tested object and the light source. Furthermore, the devices does not comprise an optical imaging system for a sensitivity increase of monitoring of movement changes inserted between the tested object and an image sensor.

Next, a device for controlling a surface displacement transducer is known from the file US 2006229744 A1. This device comprises at least one of a relative or absolute correlation surface displacement transducer. The relative displacement transducer uses a light source which is coherent and measures the displacement using a speckle pattern. The absolute displacement transducer uses a conventionally imaged scale pattern located on the object's surface under test, the light source which is an incoherent light source, and the surface is nominally located in the focal plane of an imaging lens. Thus this device is restricted to necessity of using of two light sources (coherent and incoherent) and using of additional scale pattern located on the object's surface under test. Next, the device may comprise a lens and a pinhole located in the lens's focal plane to make the magnification of the image of the object's surface on the light detector approximately independent of the distance from the lens to the surface. Such a telecentric arrangement is used in reduction of image distortion.

Finally, from the file US 6 248 994 B1 is known a method and device for determining relative angular displacements and relative surface translations of parts of the object under test. The angular displacement and surface translations evaluation is based on comparing Fourier-transformed speckles to the stored ones through the position of the cross-correlation maximum. The device uses Fourier-transforming means for realizing the optical Fourier transform. Such a means requires the detector to be located only in or near the Fourier plane of the Fourier-transforming means. The distance of the Fourier-transforming means to the object and the focal length of the Fourier-transforming means only change the scale of the Fourier transform as it is known from the publication *"*Introduction to Fourier Optics" (Goodman, J.W., Roberts & Company Publishers, Englewood, 2005). Therefore, this means does not allow to increase the sensitivity of the observed changes in the object motion, i.e. to increase shift of the Fourier-transformed speckles for the same displacement of the object. Further, the device does not include an illuminating optical system which is adjustably fixed into a motor-driven translation system located between the object under test and the light source. Also, the device does not contain the rotary and translation component which form solid unit together with the object under test for calibration, so its use, according to the file US 6 248 994 B1, is limited to detecting the relative displacement of the object, which is in particular advantageous for absolute rotation encoder applications.

Evidently, from the point of view of type of measurement, the sensors can be divided into relative ones and absolute ones, as described, for example, in publications *"*The Earth's Magnetism" (Lanza, R., Meloni, A., Springer, Berlin, 2006) and *"*Measurement and Detection of Radiation" (Tsoulfanidis, N., Landsberger, S., CRC Press, Boca Raton, 2011). In relative measurement, the measured magnitude only informs about the size of change (increase or decrease) in the magnitude between the two states of the same object. Sensors measuring relatively using speckle effect have a measurement range limited by the speckle pattern decorrelation (by decrease in the similarity of speckle patterns). In case of measurement of arbitrarily large ranges, this deficiency is eliminated by dividing the measured section into smaller ones that satisfy the condition for decorrelation of the speckle pattern, as described in the publication *"*Strain and Torque Measurements on Cylindrical Objects Using the Laser Speckle Strain Gauge" (Sjodahl, M., Yamaguchi, I., Optical Engineering, 35, 1996, p. 1179). Then, the measurement result is the sum of partial relative measurements. However, this procedure causes increase in a measurement result error as the measuring range increases. Each of the measurements has an error, and the resulting error is then the sum of them. For this reason, attention is paid to absolute measuring sensors based on speckle effect. These ones do not suffer from deficiencies that the relative sensors have, the measuring range is not limited by the decorrelation and the resulting error is not additive. These sensors unlike the relative sensors must have a device for calibration which assigns a quantitative reading, for example given by an etalon, to defined object states.

In case of sensors detecting absolute motion of an object, these ones include a component for calibration which is a device that rotates and translates an object in defined manner. Thus, this device is generally composed of several components. A rotary component rotates the object and a translation component shifts the one. The components can function on different physical principles. Translation components are known, for example, in the file US20080114519A1 in which a translation component that is in direct contact with a linear actuator changes its position, or in the publication *"*Design Analysis of Taper Width Variations in a Magnetless Linear Machine for Traction Applications" (Aminath Saadha, et al., In: MATEC Web Conf., Volume 152, 2018, 9th Eureca 2017 International Engineering Research Conference), in which a translation component uses electromagnetism to change its position. Rotary components are also known, for example, in the file WO2010068965, wherein rotational motion of a rotary component is generated by the conversion of movement of a linear actuator or in the file EP0522741A1 presenting a device for indexing a rotary component.

The aim of featured invention is to design the system for non-contact detection of an absolute position of moving object by making use of a speckle effect in optics, when the monitored object is illuminated by a beam of a coherent or quasi-coherent light from a light source, which operates in visible, near-infrared or near-ultraviolet region of the spectrum. The presented invention enables registration of position of the object with possibility of its accurate quantitative, thus numeral, evaluation, whereas it is not necessary during the evaluation to determine particular component of rotation or translation of a small deformation tensor according to derived model of measurement, because searched value of rotation or translation component is not determined by the help of derived model of measurement, i.e. from function dependence between detected speckle field displacement and corresponding size of relative rotation component or relative translation component of the object for given geometric parameters of experimental system.

### The essence of the invention

The mentioned goal is met by a system for non-contact detection of an absolute position of moving object by making use of the speckle effect comprising;
- an illumination block comprising;
   ∘ a light source which operates in the visible, near-infrared or near-ultraviolet region of the spectrum, and
   ∘ an illuminating optical system adjustably fixed into a motor-driven translation system configured to be placed between the moving object and the light source, and which is connected to
- a controlling and evaluating system having a memory for storing speckle field images, and
- an image sensor configured to be placed in a selected plane of observation of the moving object and connected to the said controlling and evaluating system, and
- an optical imaging system configured to be located between the image sensor and the moving object, and
- a rotary and translation component for calibrating the system for detecting the absolute position of the object, and which is connected to the controlling and evaluating system, and configured to be coupled to the said moving object during a calibration phase,
where the light source, the motor-driven translation system, the controlling and evaluating system and the rotary and translation component are connected to a power supply, and the controlling and evaluating system is configured to determine the absolute position of the object, in a detection phase, by correlating the speckle field image from the object with a set of images recorded and saved during the calibration phase, one saved image for each possible position of said object.

With this presented invention is reached a new and higher efficiency in that that for an accurate quantification of rotation or translation position of tested object is no longer necessary to know the values of geometric parameters of the experimental system. Required information is obtained only by a statistical comparison, by correlation, of image of speckle field recorded during measurement with images of speckle fields recorded during calibration, whereas the accurate quantification of the position of rotation or translation of tested object is absolute.

### Drawings clarification

Particular examples of design of the invention are schematically illustrated in enclosed drawings where:
Fig. 1 is a block scheme of the system,
Fig. 2 is a block scheme with a detailed design of the system with a tested object, which is placed on a rotary and translation component, which form solid unit with the object,
Fig. 3 is an example of outputs of a cross-correlation of intensity signals in speckle patterns, where among all intensity signals are identified two highly correlated signals - calibration and measuring and the correlation maximum has been detected,
Fig. 4 is an example of outputs of a cross-correlation of intensity signals in speckle patterns, where all the intensity signals - calibration and measuring are identified as different and the correlation maximum has not been detected.

The drawings which illustrate featured invention and consequently described examples of particular designs do not in any case limit extend of the protection which is mentioned in the definition but merely clarify the essence of the invention.

### Examples of design of the invention

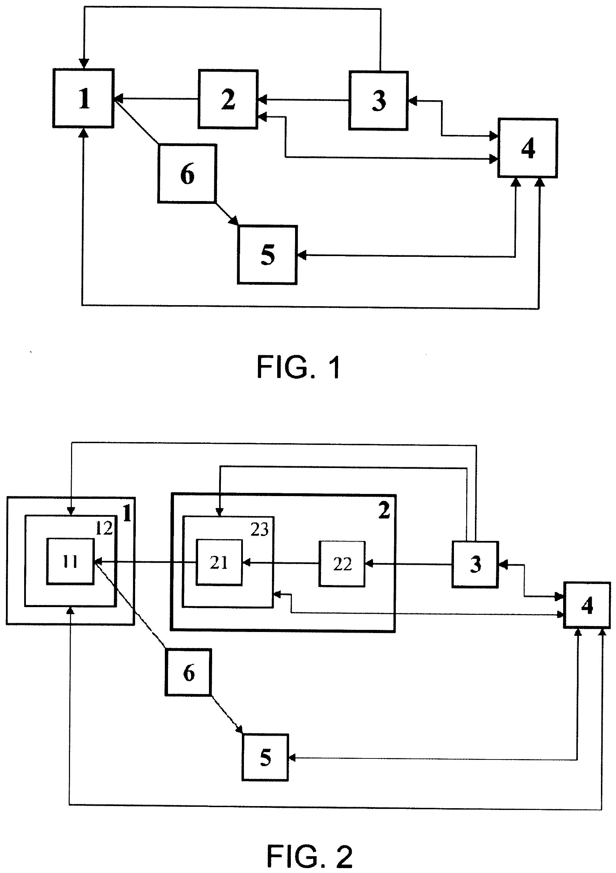

In a basic design according to fig.1 and detailed design according to fig.2 an object 11 is placed on a rotary and translation component 12 in the way that the rotary and translation component 12 forms with the scanned object 11 solid unit 1 which ensures controlled calibration of the system for consequent detection of an absolute position of the object 11. The system for non-contact detection of the movement of the object 11 is for an illumination of the object 11 by a coherent or a quasi-coherent light formed by an illumination block 2 which consists partly of a light source 22, which is realized for example by a laser or laser diode, operating in a visible, near-infrared or near-ultraviolet region of the spectrum, and partly of an illumination illuminating optical system 21 which is adjustably fixed into a motor-driven translation system 23. The motor-driven translation system 23 is placed between the tested object 11 and the light source 22 and is connected to a controlling and evaluating system 4, for example a computer system. The rotary and translation component 12, the light source 22, the motor-driven translation system 23 and the controlling and evaluating system 4 are connected to a power supply 3 which works either autonomously or is controlled from the controlling and evaluating system 4. In a selected plane of the observation of the object 11 is placed an image sensor 5, for example a matrix or linear sensor which is based on CCD (Charged Coupled Device) technology or CMOS (Complementary Metal Oxid Semiconductor) technology, which is also connected to the controlling and evaluating system 4. For a sensitivity increase of monitoring of movement changes, an optical imaging system 6, for example a converging lens, a diverging lens or an imaging objective is inserted between the monitored solid unit 1 and the image sensor 5. If more image sensors 5 are used it is possible to insert corresponding amount of optical imaging systems 6.

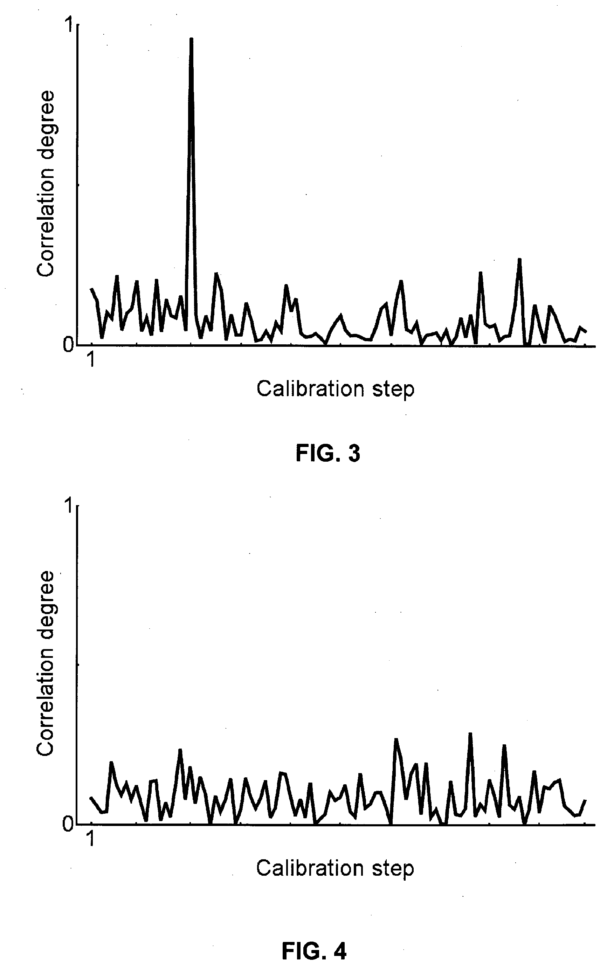

During detection of an absolute position of illuminated rotating or translating tested object 11 is at first, during a calibration phase, speckle field generated by this object 11 recorded on the image sensor 5 and saved into its memory or into the memory of the controlling and evaluating system 4, namely for each position of the object 11 in a selected range of the movement of rotary and translation component 12 which is determined from the controlling and evaluation system 4. Consequently, in the phase of measurement and evaluation of the detection of position of rotation or translation of the object 11, is for its particular unknown position recorded speckle field compared to images of speckle fields which were recorded during the calibration. If the position of the object during the measurement is identical with the position during the calibration there are identified two highly correlated intensity signals, measuring and calibrating, as it is illustrated in fig. 3. In case that the unknown position of the object 11 is outside the calibration position, there are not identified any two highly correlated signals between a measuring intensity signal and calibration intensity signals, as it is illustrated in fig. 4.

### The Industrial use

The system according to the invention is possible to use in case of a requirement for non-contact detection of an absolute position of moving object in whole extend of its movement which is advantageous especially in industrial and scientific applications.

## Claims

1. A system for non-contact detection of an absolute position of moving object by making use of the speckle effect comprising;
• an illumination block (2) comprising;
∘ a light source (22) which operates in the visible, near-infrared or near-ultraviolet region of the spectrum, and
∘ an illuminating optical system (21) adjustably fixed into a motor-driven translation system (23) configured to be placed between the moving object (11) and the light source (22), and which is connected to
• a controlling and evaluating system (4) having a memory for storing speckle field images, and
• an image sensor (5) configured to be placed in a selected plane of observation of the moving object (11) and connected to the said controlling and evaluating system (4), and
• an optical imaging system (6) configured to be located between the image sensor (5) and the moving object (11), and
• a rotary and translation component (12) for calibrating the system for detecting the absolute position of the object (11), and which is connected to the controlling and evaluating system (4), and configured to be coupled to the said moving object (11) during a calibration phase,
wherein the light source (22), the motor-driven translation system (23), the controlling and evaluating system (4) and the rotary and translation component (12) are connected to a power supply (3),
**characterized in that** the controlling and evaluating system (4) is configured to determine the absolute position of the object (11), in a detection phase, by correlating the speckle field image from the object with a set of images recorded and saved during the calibration phase, one saved image for each possible position of said object (11).

## Patentansprüche

1. System zur berührungslosen Erfassung einer absoluten Position eines sich bewegenden Objekts unter Verwendung des Speckle-Effekts, bestehend aus;
• einem Beleuchtungsblock (2), bestehend aus
∘ einer Lichtquelle (22), die im sichtbaren, nahinfraroten oder nahultravioletten Bereich des Spektrums arbeitet, und
∘ einem optischen Beleuchtungssystem (21), das in ein motorbetriebenes Verschiebungssystem (23) verstellbar eingefügt ist, das für den Einsatz zwischen dem sich bewegenden Objekt (11) und der Lichtquelle (22) konfiguriert ist, und das mit
• einem Steuerungs- und Auswertungssystem (4) mit einem Speicher zum Speichern von Speckle-Mustern verbunden ist, und
• einem Bildsensor (5), der dazu konfiguriert ist, in einer ausgewählten Beobachtungsebene des sich bewegenden Objekts (11) platziert zu werden, und mit dem Steuerungs- und Auswertungssystem (4) verbunden ist, und
• einem optischen Abbildungssystem (6), das dazu konfiguriert ist, zwischen dem Bildsensor (5) und dem sich bewegenden Objekt (11) angeordnet zu werden, und
• einer Dreh- und Verschiebungskomponente (12) zum Kalibrieren des Systems für die Erfassung der absoluten Position des Objekts (11), die mit dem Steuerungs- und Auswertesystem (4) verbunden ist und dazu konfiguriert ist, mit dem sich bewegenden Objekt (11) während einer Kalibrierungsphase gekoppelt zu werden,
wobei die Lichtquelle (22), das motorbetriebene Verschiebungssystem (23), das Steuer- und Auswertesystem (4) und die Dreh- und Verschiebungskomponente (12) an eine Stromversorgung (3) angeschlossen sind,
**dadurch gekennzeichnet, dass** das Steuerungs- und Auswertesystem (4) dazu konfiguriert ist, die absolute Position des Objekts (11) in einer Erfassungsphase zu bestimmen, indem das Speckle-Muster des Objekts mit einem Satz von Bildern korreliert wird, die während der Kalibrierungsphase aufgenommen und gespeichert wurden, ein gespeichertes Bild für jede mögliche Position des Objekts (11).

## Revendications

1. Système de détection sans contact de la position absolue d'un objet en mouvement en utilisant l'effet de speckle comprenant :
• un bloc d'éclairage (2) comprenant ;
∘ une source de lumière (22) qui fonctionne dans la région visible du spectre, proche de l'infrarouge ou de l'ultraviolet, et
∘ un système optique d'éclairage (21) fixé de manière réglable dans un système de translation entraîné par un moteur (23) configuré pour être placé entre l'objet en mouvement (11) et la source de lumière (22), et qui est connecté à
• un système de contrôle et d'évaluation (4) ayant une mémoire pour stocker des images de champ de speckle, et
• un capteur d'image (5) configuré pour être placé dans un plan d'observation sélectionné de l'objet en mouvement (11) et connecté audit système de commande et d'évaluation (4), et
• un système d'imagerie optique (6) configuré pour être situé entre le capteur d'image (5) et l'objet en mouvement (11), et
• un composant rotatif et de translation (12) servant à calibrer le système de détection de la position absolue de l'objet (11) et qui est connecté au système de commande et d'évaluation (4) et configuré pour être couplé audit objet en mouvement (11) pendant la phase d'étalonnage,
dans lequel la source de lumière (22), le système de translation entraîné par un moteur (23), le système de commande et d'évaluation (4) et le composant rotatif et de translation (12) sont connectés à la source d'alimentation (3),
**caractérisé en ce que** le système de contrôle et d'évaluation (4) est configuré pour déterminer la position absolue de l'objet (11), dans une phase de détection, en corrélant l'image du champ de speckle de l'objet avec un ensemble d'images enregistrées et sauvegardées pendant la phase d'étalonnage, une image enregistrée pour chaque position possible dudit objet (11).
